(19)

Europäisches
Patentamt
European
Patent Office
Office européen
des brevets

(11)     **EP 2 429 101 A1**

(12)                    **EUROPEAN PATENT APPLICATION**

(43) Date of publication:
**14.03.2012 Bulletin 2012/11**

(21) Application number: **10175752.4**

(22) Date of filing: **08.09.2010**

(51) Int Cl.:
*H04B 10/148* (2006.01)          *H04B 10/155* (2006.01)
*H04J 14/02* (2006.01)

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(71) Applicant: **University College Cork-National University of Ireland, Cork**
**Cork (IE)**

(72) Inventors:
 • **Ellis, Andrew. D.**
  **Cork (IE)**
 • **Sygletos, Stylianos**
  **Cork (IE)**

 • **Gunning, Fatima C. Garcia**
  **Cork (IE)**
 • **Frascella, Paola**
  **Cork (IE)**
 • **Ibrahim, Selwan K.**
  **Cork (IE)**
 • **Weerasuriya, Ruwan**
  **IE (IE)**

(74) Representative: **Lucey, Michael**
**PURDYLUCEY**
**Intellectual Property**
**Suite 138-139**
**The Chapel Building**
**Mary's Abbey**
**Dublin 7 (IE)**

(54)    **Multi-carrier system and method for use in an optical network**

(57)    The invention provides a multi-carrier system for use in an optical network adapted to transmit and/or receive signals, said system comprising means for recovering multiple phase-synchronised sub-carriers from at least one signal in the network; means for recovering a clock signal from the sub-carriers and determining the frequency and the phase change between sub-carriers; and means for compensating the signal using said clock signal. The clock signal can be re-used for new generation of same frequency spacing subcarriers (and phase-locked) to the original signal. Any fluctuations of both frequency and the phase from the original phase-synchronised signal is transferred also to the clock signal, and therefore, using appropriate feedback electronics, compensation can be provided at a transmitter/receiver. Suitable for Optical Orthogonal Frequency Division Multiplexing (OFDM) and Coherent WDM multi-carrier systems.

**Figure 2**

**EP 2 429 101 A1**

**Description**

**Field of the Invention**

The invention relates to a multi-carrier system and method for use in an Optical Network. In particular the invention relates to Optical Orthogonal Frequency Division Multiplexing (OFDM) and Coherent WDM multi-carrier systems.

**Background to the Invention**

Next generation optical networks require high capacity transponders based on multi-carrier systems, such as Optical Orthogonal Frequency Division Multiplexing (OFDM) and Coherent WDM. The network challenges will therefore be on the switching node architectures, especially for subcarriers (and subcarrier bands) add-drop multiplexers, subcarrier (and/or band) regeneration, amongst others.

For an optical OFDM switching platform, phase alignment between neighbouring sub-carriers should be also ensured to minimize crosstalk without compromising in spectral efficiency. This additional functionality has to be included in the add port of an OFDM switch, and represents a beyond the state-of-the-art architectural concept of ROADM architectures.

Each node in an optical network should enable an optimum flexibility in terms of add-drop capabilities, improve long-distance network transparency and reduce power consumption. In addition, the multi-band OFDM should offer flexible aggregation/disaggregation capabilities targeting applications for converged access, metro and core networks.

Heretofore no solution has been developed to compensate for fluctuations in the phase and/or frequency for optical OFDM networks.

It is an object of the invention to provide a multi-carrier system and method for an optical network to compensate for phase and/or frequency fluctuations.

**Summary of the Invention**

According to the present invention there is provided, as set out in the appended claims, a multi-carrier system for use in an optical network adapted to transmit and/or receive signals, said system comprising:

> means for recovering multiple phase-synchronised sub-carriers from at least one signal in the network;
> means for recovering a clock signal from the sub-carriers and determining the frequency and the phase change between sub-carriers; and
> means for compensating the signal using said clock signal.

In one embodiment the means for compensating uses the clock signal for new generation of same frequency spacing subcarriers and phase-locked to the original phase-synchronised signal in the network.

In one embodiment the means for compensating comprises a feedback loop to a transmitter, wherein the clock signal compensates for fluctuations of both frequency and phase from the original phase-synchronised signal.

The invention provides for multi-carrier regeneration for node switching, including clock recovery and sampling synchronisation based on carrier-recovery using injection locking lasers, filtering techniques using comb generators with injection locking lasers, and multi-carrier clock recovery using four-wave mixing in a non-linear medium.

The invention enables add/drop, clock recovery, carrier recovery, and therefore regeneration of multi-carrier systems, such as digital OFDM and all-optical OFDM, including phase sensitive schemes such as Coherent WDM. Applications of the invention include a switchable OFDM regenerator, frequency slot allocation interchanger, clock recovery and synchronous sampling.

In one embodiment said means for recovering comprises an add/drop multiplexer.

In one embodiment said means for generating comprises a comb signal generation and phase synchronization subsystem.

In one embodiment the comb generation and phase synchronization subsystem comprises an injection locked laser and cascaded MZ amplitude modulator.

In one embodiment the injection locked laser generates at least one new sub-carrier signal, which is phase coherent with the recovered carrier signal.

In one embodiment said injection locked laser is adapted to select and amplify the recovered carrier as well as to improve the OSNR level and mitigate against any degradation in the signal.

In one embodiment the means for generating comprises a slow PLL circuit adapted to stabilize said sub-carriers against unwanted frequency drifts.

In one embodiment the laser is adapted to generate a large comb spectrum and phase synchronized by a large bandwidth optical PLL circuit.

In one embodiment the large bandwidth optical PLL circuit comprises a single sideband modulator adapted to synchronize simultaneously the sub-carrier signals.

In one embodiment the system comprises an OFDM regenerator.

In one embodiment there is provided a frequency slot allocation interchanger.

In one embodiment said means for recovering comprises means for recovering a clock signal.

In one embodiment there is provided means for recovering phase information from adjacent subcarriers enabling generation of an error signal for phase optimisation.

In one embodiment there is provided means for converting a carrier-less signal into a carrier-enabled signal.

In one embodiment the means for converting comprises a four wave mixer.

According to another embodiment of the invention there is provided method for use in an optical network adapted to transmit and/or receive signals, said method comprising the steps of:

recovering multiple phase-synchronised sub-carriers from at least one signal in the network;
measuring a clock signal from the sub-carriers and determining the frequency and the phase change between sub-carriers; and
compensating the signal using said clock signal.

There is also provided a computer program comprising program instructions for causing a computer program to carry out the above method which may be embodied on a record medium, carrier signal or read-only memory.

### Brief Description of the Drawings

The invention will be more clearly understood from the following description of an embodiment thereof, given by way of example only, with reference to the accompanying drawings, in which:-

Figure 1 illustrates a block diagram representing the functionalities of a multi-wavelength carrier selectable source unit;
Figure 2 illustrates a carrier and clock recovery scheme, according to a preferred embodiment of the invention;
Figure 3a to 3c illustrates a number of different implementations of the clock recovery according to different implementations of the invention;
Figure 4 illustrates a detailed diagram of the comb generation and phase synchronisation, according to one embodiment of the invention;
Figure 5 illustrates a detailed diagram of the comb generation and phase synchronisation, according to another embodiment of the invention;
Figure 6 illustrates representation of signals and pump, and four wave mixing process;
Figure 7 illustrates (a) Input BPSK spectrum. (b) FW spectrum at HNLF outputs; and
Figure 8 illustrates for multiple carrier-less data signals (two subcarriers) separated by frequency.

### Detailed Description of the Drawings

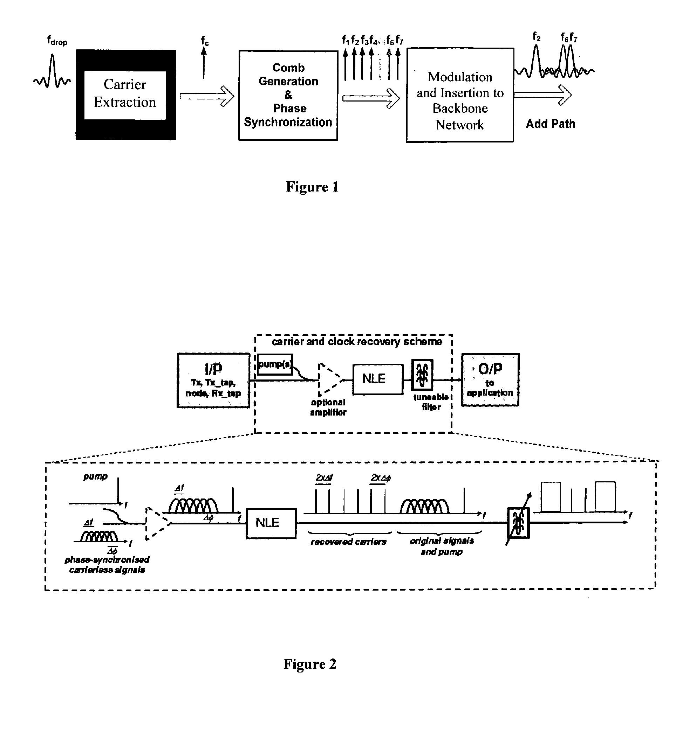

A multi-wavelength carrier selectable source unit is generally illustrated in the block diagram of Figure 1. The unit is adapted to perform:

a) recovery of carrier information from a dropped (carrier-less) QPSK signal. This carrier will be subsequently used as a reference signal for phase synchronization.
b) generation of multiple sub-carriers (comb signal) and phase synchronization of them with the reference signal.
c) selection of the required comb-carriers, modulation by data and insertion to the network.

It will be appreciated that different subsystem solutions can be implemented to achieve the functionality each block represents.

Referring now to Figure 2, Figure 2 illustrates a carrier and clock recovery scheme, according to a preferred embodiment of the invention. A tap from the transmitted phase-synchronised carrier-less signal (such as, for example, a single Coherent WDM band) is combined with a signal from a laser, for example a cw pump laser. The pump laser will act as an active role in providing the nonlinear carrier components. The optical power may be boosted by a high power optical amplifier prior to launch to a nonlinear element (NLE), as, for example, highly nonlinear optical fibre. The output of the NLE will be therefore comprised of the pump and original signals, and other idler components (which will be described in details in the clock-recovery section below), including the recovered sub-carriers from the original signal. This signal can then be filtered, so only the sub-carriers under interest are detected, which are dependent on the original frequency and phase difference between sub-carriers. Figure 2 shows, as an example, when only two sub-carriers are required and, after detection and processing of the signal, the clock is recovered. The clock recovered signal will typically have a frequency $2\Delta f$ and phase $2A\phi$. The clock signal can be re-used for new generation of same frequency spacing subcarriers (and phase-locked) to the original signal, which is important for node-like applications, such as add-drop multiplexers. Any fluctuations of both $\Delta f$ and $\Delta \phi$ from the original phase-synchronised signal is transferred also to the clock signal, and therefore, using appropriate feedback electronics, compensation can be provided at the transmitter.

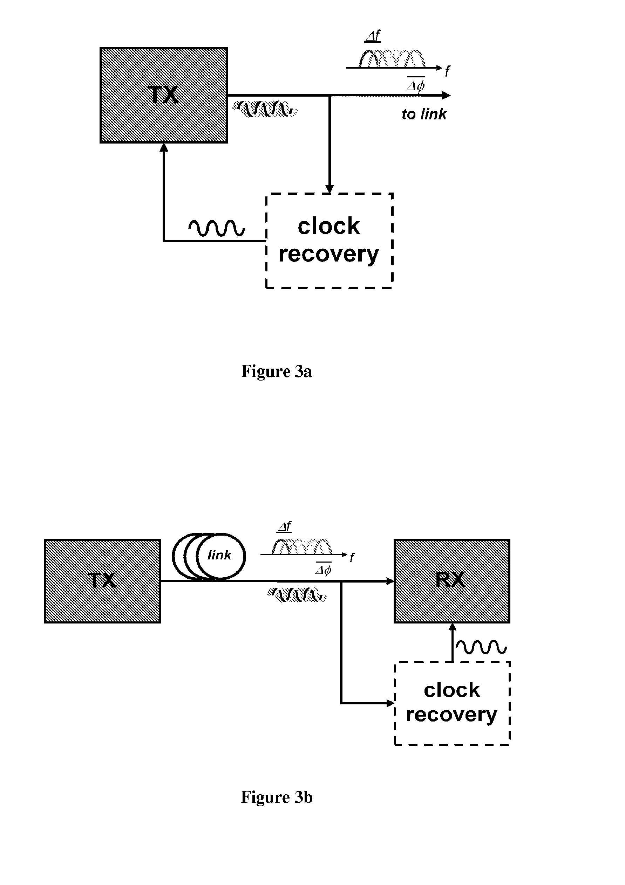

Example implementations of the system are shown in Figures 3a to 3c, where variation of the phase difference between adjacent subcarriers in the transmitter can be monitored and compensated using the system.

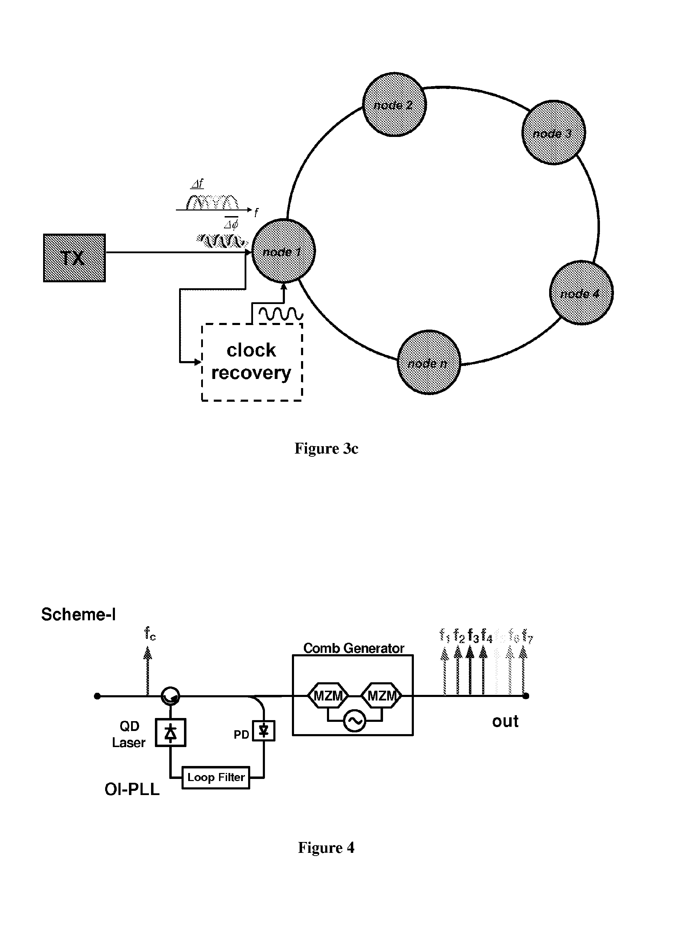

Figure 3a shows clock and phase recovery to compensate for phase variations at the transmitter side. Figure 3b illustrates how clock, frequency and phase recovery to be implemented at the receiver - critical for both direct and coherent detection. Figure 3c illustrates clock, frequency and phase recovery for synchronisation at a network node. Critical for add/drop multiplexers.

Other applications, include frequency, phase and clock recovery for the receiver (critical for coherent detected systems) and for a node in a network (critical for add-drop multiplexers, for example).

1. Carrier extraction schemes from carrier-less QPSK-OFDM signals

Carrier recovery remains an important challenge due to the fact that coherent modulation formats including phase shift keying (PSK) are carrier suppressed in nature. Without the presence of the optical carrier, the most straightforward phase recovery techniques, including injection locking and optical phase lock loops (OPLLs), cannot be applied directly.

2. Multiple sub-carrier generation and phase synchronization

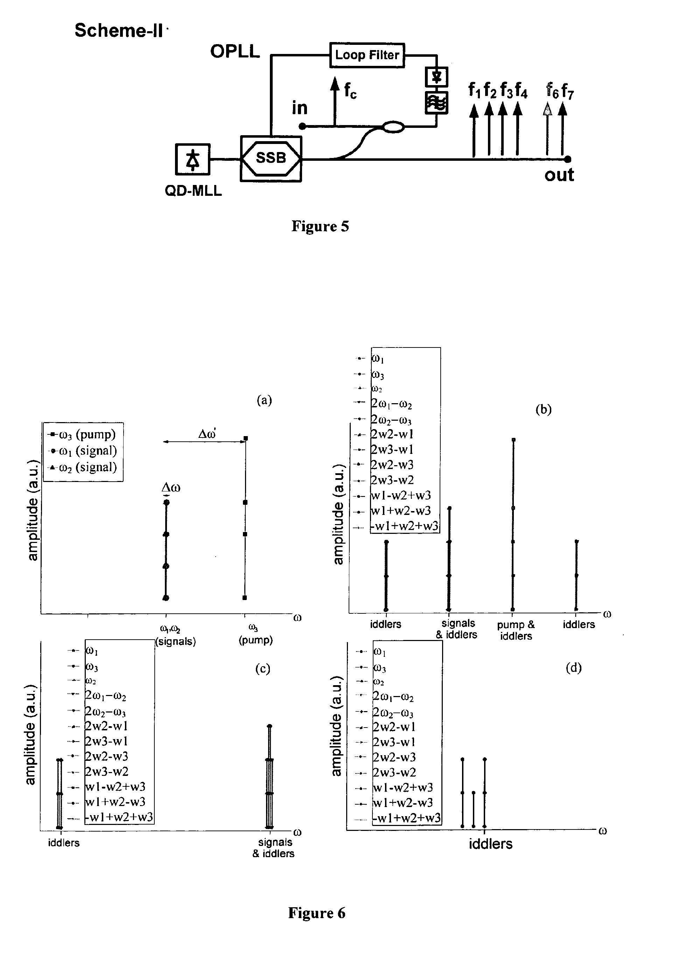

The recovered carrier will be used as a reference to synchronize multiple new sub-carriers before impinging the information and inserting them into the backbone network. This process ensures phase coherency of the each new sub-carrier with the other signals in the through path. The exact orthogonal condition (of $\pi/2$ phase shift) can be achieved by additional low bandwidth OPLL circuits at the final stage of the carrier selectable source unit. This dual functionality differentiates the all-optical OFDM switch that for the first time with the traditional add/drop multiplexing architectures of D/WDM. The invention provides two different approaches to perform comb generation and phase synchronization, as shown in Figures 4 and 5.

Figure 4 illustrates a comb generation and phase synchronization subsystem based on an optical injection PLL and cascaded MZ amplitude modulators. Through injection locking of the QD-MLL a new sub-carrier is generated, which is phase coherent with the one resulted one from the carrier recovery process. Injection locking is required to select and amplify the recovered carrier as well as to improve its OSNR level that might have been degraded by the previous processes. Additional control by a slow PLL circuit can be used to stabilize against environmentally induced frequency drifts. The recovered carrier will be subsequently replicated in frequency by two cascaded amplitude MZM driven at 12.6 GHz.

Figure 5 illustrates a QD-MLL laser adapted to generate a large comb spectrum that can be phase synchronized by a large bandwidth optical PLL circuit driving a single sideband modulator to generate directly the comb. This technique presents several advantages compared to the use of a set of single mode distributed feedback (DFB) lasers. For instance, the channel spacing is determined by the mode spacing of the MLL and the generated lines are coherent. A high bandwidth optical PLL circuit driving a single sideband modulator (SSB) will be subsequently used to synchronize simultaneously all the lines of the comb.

The embodiments shown in Figures 4 and 5 ensure advanced and robust performance significant beyond the state of the art progress, is required for their building components, namely the QD-MLL and the optical phase lock loop circuit.

Clock Recovery

An important aspect of the invention is the recovery of the clock signal. Optical fibres can allow a carrier-less signal (centred at $f_0$ or $\omega_0$) to be converted into a carrier-enabled one by four-wave mixing (FWM). Such effects can also be generated by other nonlinear media, such as semiconductor amplifiers, amongst others. Considering, for generality, that the total optical field can be defined as:

$$\vec{E} = \vec{E}_1 + \vec{E}_2 + \vec{E}_3$$

Where $\overline{E}_1$ and $\overline{E}_2$ are data signals and $\overline{E}_3$ is a strong pump signal. Considering only the propagation direction ($\vec{z}$), $\overline{E}_1$, $\overline{E}_2$ and $\overline{E}_3$ can be therefore written as:

$$E_1 = A_1 \cdot e^{-\iota(\omega_1 t - \varphi_1)} + A_1^* \cdot e^{+\iota(\omega_1 t - \varphi_1)}$$

$$E_2 = A_2 \cdot e^{-\iota(\omega_2 t - \varphi_2)} + A_2^* \cdot e^{+\iota(\omega_2 t - \varphi_2)}$$

$$E_3 = A_3 \cdot e^{-\iota(\omega_3 t - \varphi_3)} + A_3^* \cdot e^{+\iota(\omega_3 t - \varphi_3)}$$

Accordingly to the nonlinearity theory in optical fibres, the nonlinear dielectric polarisation is therefore given by:

$$P_{NL} = \varepsilon_0 \cdot \chi^{(3)} \cdot \left( E_1 + E_2 + E_3 \right)^3$$

By expanding the cubic term with Mathematica, the following expression appears (here w means $\omega$ and $p$ means $\varphi$):

$$e^{3\iota(tw1-p1)}A1^3 \quad 3A2\,e^{2\iota(tw1-p1)\,\iota(tw2-p2)}A1^2 \quad 3A3\,e^{2\iota(tw1-p1)\,\iota(tw3-p3)}A1^2 \quad 3\,e^{\iota(tw1-p1)}A1\,A1^2$$
$$3\,e^{\iota(w2-p2)\,2\iota(tw1-p1)}A2\,A1^2 \quad 3\,e^{\iota(w3-p3)\,2\iota(tw1-p1)}A3\,A1^2 \quad 3A2^2\,e^{\iota(tw1-p1)\,2\iota(tw2-p2)}A1$$
$$3A3^2\,e^{\iota(tw1-p1)\,2\iota(tw3-p3)}A1 \quad 6A2A3\,e^{\iota(tw1-p1)\,\iota(tw2-p2)\,\iota(tw3-p3)}A1 \quad 3\,e^{\iota(tw1-p1)}A1\,^2A1$$
$$3\,e^{2\iota(tw2-p2)\,\iota(tw1-p1)}A2\,^2A1 \quad 3\,e^{2\iota(tw3-p3)\,\iota(tw1-p1)}A3\,^2A1 \quad 6A2\,e^{\iota(tw2-p2)}A1\,A1 \quad 6A3\,e^{\iota(tw3-p3)}A1\,A1$$
$$6A2\,e^{\iota(tw1-p1)\,\iota(tw2-p2)}A2\,A1 \quad 6A3\,e^{\iota(tw1-p1)\,\iota(tw2-p2)\,\iota(tw3-p3)}A2\,A1 \quad 6\,e^{\iota(tw2-p2)}A1\,A2\,A1 \quad 6A3\,e^{\iota(tw1-p1)}A3\,A1$$
$$6A2\,e^{\iota(tw1-p1)\,\iota(tw2-p2)\,\iota(tw3-p3)}A3\,A1 \quad 6\,e^{\iota(tw3-p3)}A1\,A3\,A1 \quad 6\,e^{\iota(tw1-p1)\,\iota(tw2-p2)\,\iota(tw3-p3)}A2\,A3\,A1$$
$$A2^3 \quad 3\,e^{\iota(tw2-p2)}\,3A2A3^2 \quad e^{\iota(tw2-p2)\,2\iota(tw3-p3)}\,3A2^2A3 \quad 2\iota(tw2-p2)\,\iota(tw3-p3)\,A3^3 \quad 3\iota(tw3-p3) \quad 3\,e^{\iota(tw1-p1)}A1\,^3$$
$$3\,e^{\iota(tw2-p2)}A2\,^3 \quad 3\,e^{\iota(tw3-p3)}A3\,^3 \quad 3A3\,2^{\iota(tw1-p1)\,\iota(tw2-p2)}A1\,^2 \quad 3A3\,2^{\iota(tw1-p1)\,\iota(tw3-p3)}A1\,^2 \quad 3A2\,e^{\iota(tw2-p2)}A2\,^2$$
$$3A3\,2^{\iota(tw2-p2)\,\iota(tw3-p3)}A2\,^2 \quad 3\,e^{\iota(tw1-p1)\,2\iota(tw2-p2)}A1\,A2\,^2 \quad 3A3\,e^{\iota(tw3-p3)}A3\,^2 \quad 3A2\,2^{\iota(tw3-p3)\,\iota(tw2-p2)}A3\,^2$$
$$3\,e^{\iota(tw1-p1)\,2\iota(tw3-p3)}A1\,A3\,^2 \quad 3\,e^{\iota(tw2-p2)\,2\iota(tw3-p3)}A2\,A3\,^2 \quad 3A2^2\,e^{\iota(tw1-p1)\,2\iota(tw2-p2)}A1$$
$$3A3^2\,e^{\iota(tw1-p1)\,2\iota(tw3-p3)}A1 \quad 6A2A3\,e^{\iota(tw1-p1)\,\iota(tw2-p2)\,\iota(tw3-p3)}A1 \quad 3A2^2\,e^{\iota(tw2-p2)}A2 \quad 3A3^2\,e^{\iota(tw2-p2)\,2\iota(tw3-p3)}A2$$
$$6A2A3\,e^{\iota(tw3-p3)}A2 \quad 3\,2^{\iota(tw1-p1)\,\iota(tw2-p2)}A1\,^2A2 \quad 6A2\,e^{\iota(tw1-p1)}A1\,A2 \quad 6A3\,e^{\iota(tw1-p1)\,\iota(tw2-p2)\,\iota(tw3-p3)}A1\,A2$$
$$6A2A3\,e^{\iota(tw2-p2)}A3 \quad 3A3^2\,e^{\iota(tw3-p3)}A3 \quad 3A2^2\,e^{\iota(tw3-p3)\,2\iota(tw2-p2)}A3 \quad 3\,2^{\iota(tw1-p1)\,\iota(tw3-p3)}A1\,^2A3$$
$$3\,2^{\iota(tw2-p2)\,\iota(tw3-p3)}A2\,^2A3 \quad 6A3\,e^{\iota(tw1-p1)}A1\,A3 \quad 6A2\,e^{\iota(tw1-p1)\,\iota(tw2-p2)\,\iota(tw3-p3)}A1\,A3$$
$$6A3\,e^{\iota(tw2-p2)}A2\,A3 \quad 6A2\,e^{\iota(tw3-p3)}A2\,A3 \quad 6\,e^{\iota(tw1-p1)\,\iota(tw2-p2)\,\iota(tw3-p3)}A1\,A2\,A3$$

The strong and important terms for the FWM are highlighted (complex conjugates not included), which has new frequencies and phases of:

| | | |
|---|---|---|
| $2\omega_1-\omega_2$; $2\varphi_1-\varphi_2$ | $\omega_1-2\omega_2$ ; $\varphi_1-2\varphi_2$ | $\omega_2-2\omega_3$ ; $\varphi_2-2\varphi_3$ |
| $2\omega_1-\omega_3$ ; $2\varphi_1-\varphi_3$ | $\omega_1-2\omega_3$ ; $\varphi_1-2\varphi_3$ | $2\omega_2-\omega_3$ ; $2\varphi_2-\varphi_3$ |

(continued)

| $\omega_1-\omega_2+\omega_3$ ; $\varphi_1-\varphi_2+\varphi_3$ | $\omega_1+\omega_2-\omega_3$ ; $\varphi_1+\varphi_2-\varphi_3$ | $\omega_1-\omega_2-\omega_3$ ; $\varphi_1-\varphi_2-\varphi_3$ |
|---|---|---|

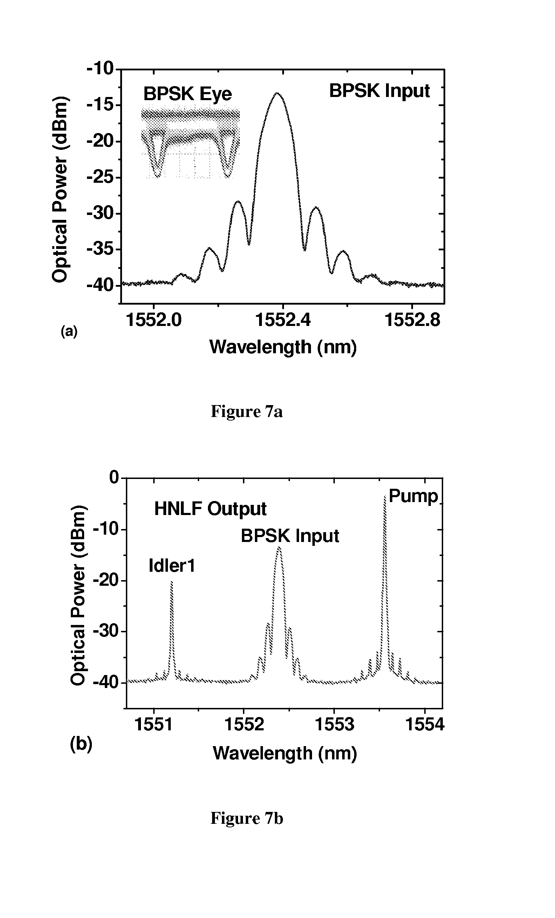

Pump and signals are represented in Figure 7a, and the nine terms generated are represented in figure 7b. In this case, $\omega_2=\omega_1+\Delta\omega$ (and consequently $\varphi_2=\varphi_1+\Delta\varphi$). Taking into consideration the terms only in the left side of the graph, and zooming in the signals and idlers, it is clear that additional contributions to the signals are generated, creating crosstalk terms. However, if the new idlers are filtered out, only three terms are seen ($2\omega_2-\omega_3$, $\omega_1+\omega_2-\omega_3$, $2\omega_1-\omega_3$). Assuming $\omega_1+\omega_2-\omega_3$ contributions are small; the optical field can be described as:

$$E_{new} = 3A_1^2 A_3^* \cdot e^{-\iota[(2\omega_1-\omega_3)t-(2\varphi_1-\varphi_3)]} + 3A_2^2 A_3^* \cdot e^{-\iota[(2\omega_2-\omega_3)t-(2\varphi_2-\varphi_3)]} + c.c.$$

Direct detection is a square-law detection, which provides the terms:

Where wg is $2\omega_1-\omega_3$ (and pg = $2\varphi_2-\varphi_3$), wf is $2\omega_2-\omega_3$ (and pf = $2\varphi_1-\varphi_3$), g is $3A_1^2 A_3^*$ and f $3A_2^2 A_3^*$, for simplicity.

Higher frequency terms will not be detected, and DC components can be filtered out, leaving, therefore, the terms highlighted in blue. For $\omega_2=\omega_1+\Delta\omega$ (and $\varphi_2=\varphi_1+\Delta\varphi$):

$$\omega_g - \omega_f = 2\omega_1 - \omega_3 - 2\omega_2 + \omega_3 = 2\Delta\omega$$

$$\varphi_g - \varphi_f = 2\varphi_1 - \varphi_3 - 2\varphi_2 + \varphi_3 = 2\Delta\varphi$$

From the idler signals it is possible, therefore, to recover the information shared between two signals.

In Coherent WDM, for example, the phase of adjacent subcarriers are $\pi/2$ shifted and the beating between these subcarriers is a clock signal (sine wave) of frequency f=$\Delta\omega/2\pi$. Therefore the scheme described above should recover both clock signal and phase information between adjacent channels, with possible implementations in carrier and clock recovery units, phase optimisation schemes, amongst others.

Figure 6 is a representation of signals and pump, and four wave mixing process.

Carrier and Phase Recovery

If a NRZ-BPSK signal ($E_s$, $\omega_s$, $\varphi_s$) and CW pump ($E_p$, $\omega_p$, $\varphi_p$) is launched to a highly non-linear medium, FWM can generate two idlers waves with amplitude ($E_{ix}$), frequency ($\omega_{ix}$) and phase ($\varphi_{ix}$) relationships shown below, as previously.

$$\omega_{i1} = (2\omega_s - \omega_p) \, , \, \varphi_{i1} = (2\varphi_s - \varphi_p)$$

$$\omega_{i2} = (2\omega_p - \omega_s) \, , \, \varphi_{i2} = (2\varphi_p - \varphi_s)$$

Figure 7(a) Input BPSK spectrum. (b) FW spectrum at HNLF output.

In generally, a BPSK signal does not have a carrier, but consists of $\{0, \pi\}$ phase encoded data (Figure 5a). For each data "0" the contribution to the idler1 phase from the BPSK data is always "0" and for each data "$\pi$" the idler1 phase contribution is "$2\pi$", which is equivalent to "0" and the signal BPSK modulation is essentially stripped from the idler.

Therefore the FWM idler1 phase always tracks the carrier phase of the signal and this recovered idler1 component (Figure 7b) can be used, for example, to injection lock a discrete mode-locked laser (DML). As the output from the DML and the original pump are symmetrically spaced frequencies with respect to the input BPSK signal it may be used, for example, as pumps in subsequent phase sensitive amplification process.

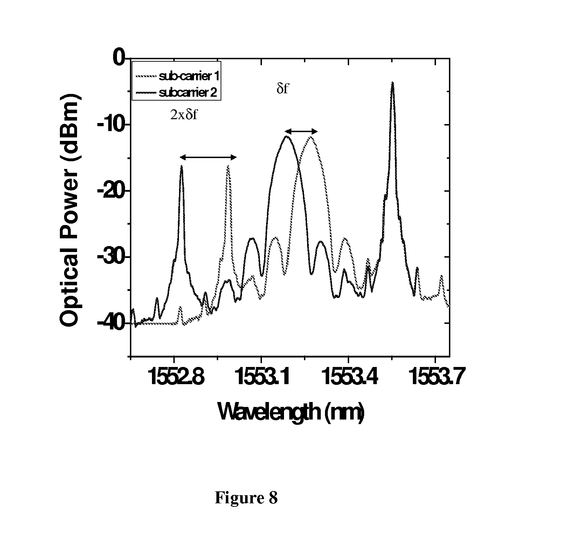

In the case of a multi-carrier system such as Coherent WDM or OFDM , such scheme could also be implemented. Figure 8 shows an illustration for multiple carrier-less data signals (two subcarriers) separated by $\delta f$. The maths for such system is described above. The detected idlers not only recovered the carrier, but also the beating signal between adjacent idlers is sensitive to the phase of the input signals, making the ideal error signal for phase sensitive applications. For example, this beating signal (or a down-converted signal) could be used as a clock recovery, if phase locking is also present. It can be implemented as a synchronous clock for an optical gating, in addition to synchronisation of the entire switch node.

This concept can also have another important application for digital OFDM, as a series of idlers from the OFDM subcarriers could act be implemented as synchronous sampling at the receiver.

It will be appreciated that the invention provides a use of the carrier-recovered signals to recover the clock from a multi-carrier system, carrier and clock recovery for a multi-carrier remote switching node, carrier and clock recovery for sampling synchronisation of OFDM signals, clock recovery for burst mode receivers, a carrier-less signal (centred at $f_0$ or $\omega_0$) to be converted into a carrier-enabled one by four-wave mixing (FWM), and use of FWM in a nonlinear medium for carriers-recovery of a multi-carrier system

The embodiments in the invention described with reference to the drawings comprise a computer apparatus and/or processes performed in a computer apparatus. However, the invention also extends to computer programs, particularly computer programs stored on or in a carrier adapted to bring the invention into practice. The program may be in the form of source code, object code, or a code intermediate source and object code, such as in partially compiled form or in any other form suitable for use in the implementation of the method according to the invention. The carrier may comprise a storage medium such as ROM, e.g. CD ROM, or magnetic recording medium, e.g. a floppy disk or hard disk. The carrier may be an electrical or optical signal which may be transmitted via an electrical or an optical cable or by radio or other means.

In the specification the terms "comprise, comprises, comprised and comprising" or any variation thereof and the terms include, includes, included and including" or any variation thereof are considered to be totally interchangeable and they should all be afforded the widest possible interpretation and vice versa.

The invention is not limited to the embodiments hereinbefore described but may be varied in both construction and detail.

## Claims

**1.** A multi-carrier system for use in an optical network adapted to transmit and/or receive signals, said system comprising:

> means for recovering multiple phase-synchronised sub-carriers from at least one signal in the network;
> means for recovering a clock signal from the sub-carriers and determining the frequency and the phase change between sub-carriers; and
> means for compensating the signal using said clock signal.

**2.** The multi-carrier system as claimed in claim 1 wherein the means for compensating uses the clock signal for new generation of same frequency spacing subcarriers and phase-locked to the original phase-synchronised signal in the network.

**3.** The multi-carrier system as claimed in claim 1 wherein the means for compensating comprises a feedback loop to a transmitter, wherein the clock signal compensates for fluctuations of both frequency and phase from the original phase-synchronised signal.

**4.** The multi-carrier system as claimed in any preceding claim wherein said means for recovering comprises an add/drop multiplexer.

**5.** The multi-carrier system as claimed in any preceding claim wherein said means for recovering comprises a comb signal generation and phase synchronization subsystem.

6. The multi-carrier system as claimed in claim 5 wherein the comb generation and phase synchronization subsystem comprises an injection locked laser and cascaded MZ amplitude modulator.

7. The multi-carrier system as claimed in claim 6 wherein the injection locked laser generates at least one new subcarrier signal, which is phase coherent with the recovered carrier signal.

8. The multi-carrier system as claimed in claims 6 or 7 wherein said injection locked laser is adapted to select and amplify the recovered carrier as well as to improve the OSNR level and mitigate against any degradation in the signal.

9. The multi-carrier system as claimed in any of claims 6 to 8 wherein the means for generating comprises a slow PLL circuit adapted to stabilize said sub-carriers against unwanted frequency drifts.

10. The multi-carrier system as claimed in any of claims 6 to 9 wherein the laser is adapted to generate a large comb spectrum and phase synchronized by a large bandwidth optical PLL circuit.

11. The multi-carrier system as claimed in claim 10 wherein the large bandwidth optical PLL circuit comprises a single sideband modulator adapted to synchronize simultaneously the sub-carrier signals.

12. The multi-carrier system as claimed in any preceding claim comprising an OFDM regenerator.

13. The multi-carrier system as claimed in any preceding claim comprising a frequency slot allocation interchanger.

14. The multi-carrier system as claimed in any preceding claim comprising means for recovering phase information from adjacent subcarriers enabling generation of an error signal for phase optimisation wherein the means for converting comprises a four wave mixer.

15. A method for use in an optical network adapted to transmit and/or receive signals, said method comprising the steps of:

recovering multiple phase-synchronised sub-carriers from at least one signal in the network;
measuring a clock signal from the sub-carriers and determining the frequency and the phase change between sub-carriers; and
compensating the signal using said clock signal.

**Figure 1**

**Figure 2**

**Figure 3a**

**Figure 3b**

Figure 3c

Scheme-I

Figure 4

**Figure 5**

**Figure 6**

Figure 7a

Figure 7b

**Figure 8**

**EP 2 429 101 A1**

## EUROPEAN SEARCH REPORT

Application Number

EP 10 17 5752

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHIEH W ET AL: "Experimental Demonstration of Transmission of Coherent Optical OFDM Systems", OPTICAL FIBER COMMUNICATION CONFERENCE AND EXPOSITION NATIONAL FIBER OPTIC ENGINEERS CONFERENCE. OFCNFOEC 2007, 25-29 MARCH 2007, ANAHEIM, CA, USA, IEEE, PISCATAWAY, NJ, USA, 1 March 2007 (2007-03-01), pages 1-3, XP031146572, ISBN: 978-1-55752-831-5 | 1-4,12, 13,15 | INV. H04B10/148 H04B10/155 H04J14/02 |
| Y | * the whole document * | 5-10 | |
| X | US 2005/180760 A1 (FECED RICARDO [GB] ET AL) 18 August 2005 (2005-08-18) * the whole document * | 1-4,12, 13,15 | |
| X | US 2009/190929 A1 (KHURGIN JACOB [US] ET AL) 30 July 2009 (2009-07-30) * abstract * * paragraph [0010] - paragraph [0016] * * paragraph [0025] - paragraph [0028] * * paragraph [0038] - paragraph [0042] * * figures 1, 5(a), 5(b), 6 * | 1-4,12, 13,15 | TECHNICAL FIELDS SEARCHED (IPC) H04B H04J H04L |
| X | WO 96/19056 A1 (HD DIVINE [SE]; NYSTROEM STAFFAN [SE]; STARE ERIK [SE]; RIGNELL MAARTE) 20 June 1996 (1996-06-20) * abstract * * figure 1 * | 1-4,12, 13,15 | |
| X | US 2006/133527 A1 (YU HEEJUNG [KR] ET AL) 22 June 2006 (2006-06-22) * the whole document * | 1-4,12, 13,15 | |

-/--

The present search report has been drawn up for all claims

| Place of search | Date of completion of the search | Examiner |
|---|---|---|
| Munich | 23 May 2011 | Rolan Cisneros, E |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt

European
Patent Office

Office européen
des brevets

## EUROPEAN SEARCH REPORT

Application Number

EP 10 17 5752

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | HEALY ET AL.: "Multi-wavelength source using low drive-voltage amplitude modulators for optical communications", OPTICS EXPRESS, vol. 15, no. 6, 19 March 2007 (2007-03-19) , pages 2981-2986, XP002637451, * the whole document * | 5-10 | |
| A | WILLIAM SHIEH ET AL: "High spectral efficiency coherent optical OFDM transmission", COMMUNICATIONS AND PHOTONICS CONFERENCE AND EXHIBITION, 2009. ACP 2009. ASIA, IEEE, PISCATAWAY, NJ, USA, 2 November 2009 (2009-11-02), pages 1-6, XP031623270, ISBN: 978-1-55752-877-3 * the whole document * | 5-10 | |
| A | JIANJUN YU ET AL: "Cost-Effective Optical Millimeter Technologies and Field Demonstrations for Very High Throughput Wireless-Over-Fiber Access Systems", JOURNAL OF LIGHTWAVE TECHNOLOGY, IEEE SERVICE CENTER, NEW YORK, NY, US, vol. 28, no. 16, 15 August 2010 (2010-08-15), pages 2376-2397, XP011302998, ISSN: 0733-8724 * Items II.A.2), II.D.3) * * figures 5-7 * | 14 | TECHNICAL FIELDS SEARCHED (IPC) |

The present search report has been drawn up for all claims

| Place of search | Date of completion of the search | Examiner |
|---|---|---|
| Munich | 23 May 2011 | Rolan Cisneros, E |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

 

& : member of the same patent family, corresponding
  document

EPO FORM 1503 03.82 (P04C01)

**ANNEX TO THE EUROPEAN SEARCH REPORT
ON EUROPEAN PATENT APPLICATION NO.**

EP 10 17 5752

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2011

| Patent document cited in search report | | Publication date | Patent family member(s) | | Publication date |
|---|---|---|---|---|---|
| US 2005180760 | A1 | 18-08-2005 | NONE | | |
| US 2009190929 | A1 | 30-07-2009 | US | 2010135656 A1 | 03-06-2010 |
| WO 9619056 | A1 | 20-06-1996 | AU | 4275196 A | 03-07-1996 |
| | | | CN | 1170486 A | 14-01-1998 |
| | | | JP | 10510958 T | 20-10-1998 |
| | | | SE | 504787 C2 | 28-04-1997 |
| | | | SE | 9404356 A | 15-06-1996 |
| US 2006133527 | A1 | 22-06-2006 | NONE | | |

EPO FORM P0459

For more details about this annex : see Official Journal of the European Patent Office, No. 12/82